Europäisches Patentamt

European Patent Office

Office européen des brevets

(11) Veröffentlichungsnummer: **0 001 283**
**B1**

(12) **EUROPÄISCHE PATENTSCHRIFT**

(21) Anmeldenummer: **78100936.0**

(22) Anmeldetag: **20.09.78**

(51) Int. Cl.³: **B 60 B 33/02**

(54) Feststellbare Lenkrolle für verfahrbare Geräte, insbesondere Müll-o.dgl. -behälter

(30) Priorität: 27.09.77 DE 2743334
05.11.77 DE 2749568
12.12.77 DE 2755262

(43) Veröffentlichungstag der Anmeldung:
04.04.79 Patentblatt 79/07

(45) Bekanntmachung des Hinweises auf die Patenterteilung:
20.08.80 Patentblatt 80/17

(84) Benannte Vertragsstaaten:
BE CH FR GB NL SE

(56) Entgegenhaltungen:
DE - A - 1 605 465
FR - A - 1 508 001

(73) Patentinhaber: Haussels, Berthold
Am Krupin 15
D - 5632 Wermelskirchen-Tente (DE)

(72) Erfinder: siehe Anmelder
see applicant
voir demandeur

(74) Vertreter: Sturies, Herbert, Dr. Ing. Dipl.-Phys.
Brahmsstrasse 29
D - 5600 Wuppertal (DE)

Courier Press, Leamington Spa, England.

## Feststellbare Lenkrolle für verfahrbare Geräte, insbesondere Müll-od.dgl. -behälter

Die Erfindung bezieht sich auf eine feststellbare Lenkrolle für verfahrbare Geräte, insbesondere Müll- od.dgl. -behälter, die mit einem aus einem nach unten durchgewölbten Boden und einem hochgezogenen, am Gerät breitflächig zu befestigenden Rand bestehenden, starkwandigen Schwenklagertopf und einer das drehbare Rollenrad sowie einen zu dessen Drehfeststellung dienenden Bremskörper tragenden Lenkgabel versehen ist, deren Rücken über eine eine zentrale Öffnung im Schwenklagertopfboden frei durchsetzende Verbindungsbüchse mit einer oberhalb des Schwenklagertopfbodens liegenden, auf ihrer Oberseite kugelkranzfreien Kugellaufschale drehfest verbunden ist, wobei zwischen letzterer und dem Schwenklagertopfboden einerseits sowie zwischen letzterem und dem Lenkgabelrücken andererseits je ein Kugelkranz angeordnet ist und in der Verbindungsbüchse ein gegen Federdruck axial verschiebbarer Stellbolzen zum Betätigen des Bremskörpers und weiterhin eine mit einer verdrehungssicher geführten, durch den Stellbolzen axial verschieblichen Sperrplatte versehene Einrichtung für die Schwenkfeststellung der Lenkgabel vorgesehen ist.

Durch die DE—A—25 34 837 ist eine feststellbare Lenkrolle obiger Art und gemäß dem Oberbegriff des Patentanspruchs 1 bekannt, bei der die Schwenkfeststellung der Lenkgabel über den in der Lenkgabelhöhlung schwenkbeweglich gelagerten Bremskörper und einen am unteren Ende des Stellbolzens drehfest angebrachten, verzahnten Schwenkfeststellteller erfolgt, der beim axialen Abwärtsverstellen des Stellbolzens mit einer am Bremskörper vorhandenen Gegenverzahnung in blockierenden Eingriff zu bringen ist. Der Stellbolzen muß zu diesem Zweck entsprechend verdrehungssicher geführt sein, und zwar in einer entsprechend massiv ausgebildeten Abdeckplatte, die zwischen dem ohnehin schon starkwandigen, aus gezogenem Stahlblech bestehenden Schwenklagertopf und der Geräteunterseite montiert ist. Demzufolge muß hier das gesamte Schwenkfeststellmoment in nachteiliger Weise über den Stellbolzen und die massive Abdeckplatte abgetragen werden, was einen entsprechend torsionssteifen und gegen Drehverstellung gesicherten Stellbolzen sowie bezüglich der massiven Abdeckplatte zusätzlichen Material- und Montageaufwand erfordert. Darüber hinaus bedingt diese Bauart einen verhältnismäßig großen und vergleichsweise komplizierten Bremskörper, für dessen Unterbringung in der Lenkgabelhöhlung ein entsprechend großer Raum erforderlich ist.

Hier will die Erfindung Abhilfe schaffen. Ihr liegt die Aufgabe zugrunde, eine feststellbare Lenkrolle zu schaffen, die von noch einfacherer Bauart, leichter zu montieren und funktionssicherer ist, insbesondere noch größere Schwenkfeststellmomente zu erzielen und deren bessere, den Stellbolzen entlastende Abtragung bei gleichzeitiger Einsparung der massiven Abdeckplatte zu erreichen erlaubt. Diese Aufgabe wird nach dem Kennzeichen des Patentanspruchs 1 dadurch gelöst, daß die Sperrplatte im Schwenklagertopf oberhalb der Kugellaufschale angeordnet, mit an ihrem Umfang vorhandenen Vorsprüngen in in der Schwenklagertopfwandung vorhandenen Aussparungen verdrehungssicher eingreift und mit der Kugellaufschale in blockierenden Schwenkfeststelleingriff zu bringen ist.

Weitere Ausgestaltungsmerkmale der Erfindung sind in den übrigen Patentansprüchen gekennzeichnet.

Die durch die Erfindung erreichten Vorteile sind im wesentlichen darin zu sehen, daß die Schwenkfeststellmomente von der mit der Lenkgabel drehfest verbundenen, im Schwenklagertopf untergebrachten Kugellaufschale über die Sperrplatte unmittelbar auf die verhältnismäßig starke und umfangsgroße Schwenklagertopfwandung übertragen werden, was eine wesentlich solidere Schwenkfeststellung der Lenkgabel sowie zugleich eine einfachere Ausbildung und Lagerung des Stellbolzens sowie des Bremskörpers ermöglicht und eine massiv ausgebildete Abdeckplatte entbehrlich macht. Da der Stellbolzen keinerlei Schwenkfeststellkräfte aufzunehmen braucht, kann er fei drehbeweglich gelagert bzw, geführt sein. Da der Bremskörper lediglich noch für die Drehfeststellung des Lenkrollenrades zu sorgen hat, kann auch er wesentlich einfacher und raumsparender ausgebildet sein sowie zugleich für die Stellbolzen-Rückstellfederung dienen. Der Stellbolzen kann gleichwohl über eine Schieberstange zentral wie auch über einen am Schwenklagertopf außen anzubringenden, vorzugsweise abschließbaren Feststellhebel einzeln betätigt werden.

Bei einer feststellbaren Lenkrolle nach der DE—A—16 05 465 ist es bereits bekannt, eine mittels eines Stellbolzens axial verschiebbare und dadurch mit einer darunter gelegenen Kugellaufschale am Lenkgabelrücken in Schwenkfeststelleingriff zu bringende Sperrplatte in einem topfartig ausgebildeten Schwenklager unter zubringen. Diese Lenkrolle ist aber gattungsfremd, da sie anstelle eines mit durchgewölbtem Boden versehenen, starkwandigen Schwenklagertopfes eine an der Geräteunterseite zu befestigende, starkwandige Befestigungsplatte aufweist, an deren Unterzeite ein verhältnismäßig dünnwandiger, im wesentlichen S-förmig profilierter, die Topfwandung bildender Ring angeschweißt ist. Dieser vermag keine nennenswerten Lastkräfte bzw. -drücke aufzunehmen und ist auch nicht dafür bestimmt, da die wesentlichen Kräfte bzw.

Drücke hier auf die Befestigungsplatte übertragen bzw. von ihr aufgenommen werden, nämlich durch den sich daran abstützenden, auf der Oberseite der Kugellaufschale vorhandenen Kugelkranz. Nachteilisg ist auch hier vor allem, daß die Schwenkfeststellmomente von der Sperrplatte nicht nach außen auf die Topfwandung, sondern auf ein im Durchmesser verhältnismäßig kleines, mit der Befestigungsplatte verschweißtes Befestigungsrohr übertragen werden, was entsprechend ungünstige Beanspruchungsverhältnisse und die auch sonst nachteilige Bauart bedingt.

Im folgenden wird die Erfindung anhand von mehrere Ausführungsbeispiele darstellenden Zeichnungen näher erläutert. Es zeigt

*Fig. 1* eine erste Ausführungsform einer erfindungsgemäßen Lenkrolle in geschnittener Ansicht,

*Fig. 2* einen Schnitt nach der Linie II—II der Fig. 1,

*Fig. 3* eine zweite, bevorzugte Ausführungsform einer erfindungsgemäßen Lenkrolle in geschnittener Seitenansicht, und zwar in der Lösestellung ihres Feststellmechanismus,

*Fig. 4* die Lenkrolle nach Fig. 3, jedoch in der Feststellage ihres Festellmechanismus,

*Fig. 5* eine Draufsicht auf die Lenkrolle nach den Fig. 3 und 4,

*Fig. 6* einen Schnitt nach der Linie VI—VI der Fig. 5,

*Fig. 7* eine dritte Ausführungsform der erfindungsgemäßen Lenkrolle in der Seitenansicht, und zwar in der Lösestellung ihres Feststellmechanismus,

*Fig. 8* die Lenkrolle nach Fig. 7 in Feststellage,

*Fig. 9 und 10* jeweils Seitenansichten der in Fig. 3 dargestellten Lenkrolle, jedoch mit abschließbarem Feststellhebel.

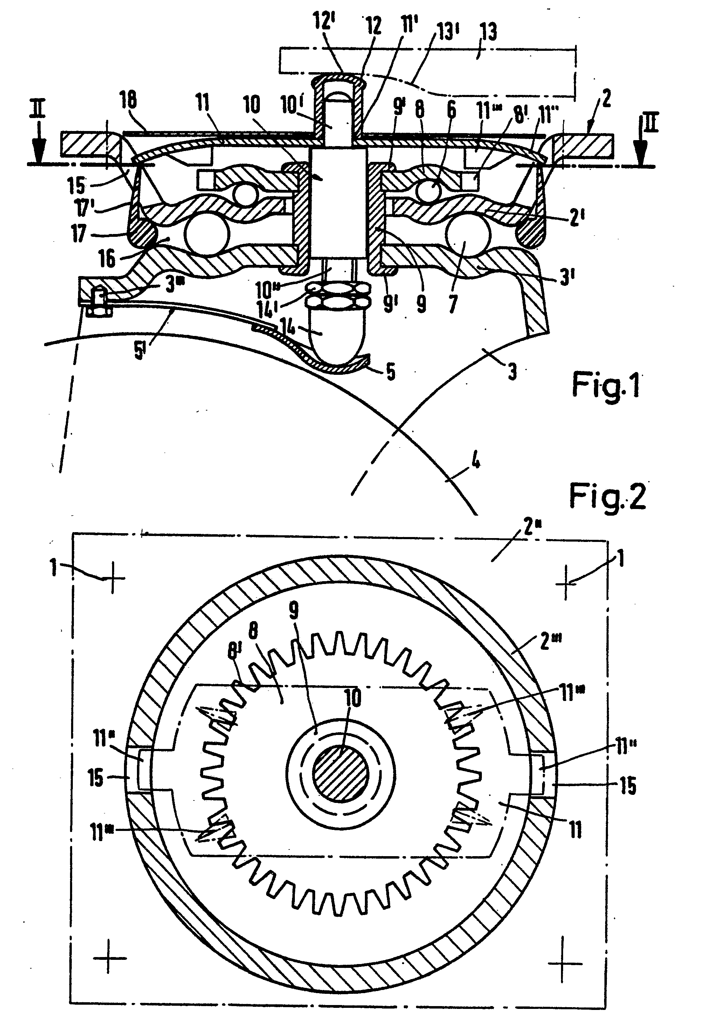

Die in den Fig. 1 und 2 dargestellte feststellbare Lenkrolle bebesteht im wesentlichen aus dem an der Geräteunterseite über die nur angedeuteten Schraubbefestigungslöcher 1 zu befestigenden Schwenklagertopf 2 und der damit schwenkbeweglich verbundenen Lenkgabel 3, die das drehbare Laufrad 4 und den zu seiner Drehfeststellung dienenden Bremskörper 5 trägt. Der Schwenklagertopf 2 besteht aus hinreichend starkem, entsprechend gezogenem Stahlblech, das in dem Bodenteil 2' auf der Ober- und Unter-seite zu laufflächen für den oberen und unteren Kugelkranz 6 bzw. 7 ausgeformt ist und weiterhin den die Befestigungslöcher enthaltenden Topfrand 2'' sowie die Topfwandung 2''' bildet. Während sich der untere, im Durchmesser größere Kugelkranz 7 an dem unmittelbar darunter gelegenen Rücken 3' der Lenkgabel abstützt, ist der obere Kugelkranz 6 an der darüber gelegenen Kugellaufschale 8 abgestützt, die über die den Schwenklagertopfboden 2' zentral frei durchsetzende Verbindungsbüchse 9 mit dem Lenkgabelrücken 3' drehfest verbunden ist. Zu diesem Zweck kann die Verbindungsbüchse 9 mit im Durchmesser entsprechend abgesetzten und gegebenenfalls auch unrund beschaffenen Aufsteckenden für die Kugellaufschale 8 und den Lenkgabelrücken 3' versehen und durch Umbördeln der überstehenden Enden 9' mit den vorerwähnten Teilen fest verpreßt sein.

In der Verbindungsbüchse 9 ist der Stellbolzen 10 axial verschieblich und frei drehbar geführt. Der Stellbolzen 10 besitzt an seinem oberen Ende einen Aufsteckzapfen 10', auf dem die mit einer entsprechenden zentralen Aufsteck öffnung 11' versehene Sperrplatte 11 aufgesetzt sowie eine letztere übergreifunde Abdeckkappe 12 aufgepreßt ist. An dem oberen zwechmäßig ballig ausgebildeten Ende 12' der Abdeckkappe 12 liegt eine nur strichpunktiert dargestellte Schieberstange 13 an, die bei ihrer Längsverstellung über die Schrägfläche 13' den Stellbolzen 10 aus seiner in Fig. 1 dargestellten Freigabestellung in seine untere Feststellage axial zu verschieben erlaubt. Diese Stellbolzenbetätigung über die Schieberstange 13 ist vorwiegend für eine zentrale Betätigung mehrerer am gleichen Gerät vorhandener Lenkrollen geeignet.

An seinem unteren Ende ist der Stellbolzen 10 mit einem Gewindezapfen 10'' versehen, auf dem die Hutmutter 14 sowie die Kontermutter 14' aufgeschraubt sind. Die hutmutter 14 liegt mit ihrem unteren Ende unmittelbar auf dem als löffelartiger Bremsschuh ausgebildeten Bremskörper 5 auf, der am freien Ende einer am Lenkgabelrücken 3' and der Stelle 3''' verschraubten Blattfeder 5' befestigt ist. Diese Blattfeder 5' hält über den Bremskörper 5 den Stellbolzen 10 in seiner dargestellten oberen Freigabestellung, so daß sich eine besondere Rückstellfeder für den Stellbolzen erübrigt. Wird dagegen der Stellbolzen 10 durch die Schieberstange 13 nach unten verschoben, so legt sich dabei der Bremskorper 5 gegen den Umfang des Rades 4, das dadurch drehfestgestellt wird.

Zur Schwenkfeststellung der Lenkgabel 3 in beliebigen Schwenkstellungen dient die im Schwenklagertopf 2 untergebrachte, am Stellbolzen 10 axial unverschieblich befestigte Sperrplatte 11, die einerseits mit in entsprechende Aussparungen 15 in der umfangsweiten Wandung des Schwenklagertopfes 2 verdrehungssicher eingreifenden Vorsprüngen 11'' versehen ist sowie andererseits mit zur Kugellaufschale 8 vorspringenden Sperrlappen 11''' versehen ist, die mit einer am Umfang der Kugellaufschale 8 vorhandenen Sperrverzahnung 8' in formschlüssigen Eingriff zu bringen sind. Das ist der Fall, wenn der Stellbolzen 10 nach unten verschoben und dadurch die Sperrplatte 11 entsprechend mitbewegt wird. Dadurch wird die Lenkgabel 3 bezüglich ihrer Schwenkbeweglichkeit solide blockiert, wobei die entsprechenden Schwenkfeststellkräfte bzw. -momente von der oberen Kugellaufschale 8 über die Sperrplatte 11 unmittelbar in die Wandung 2''' des Schwenklagertopfes 2 übertragen werden.

Zur Abdeckung des den unteren Kugelkranz 7 umgebenden Ringspalts 16 zwischen dem Schwenklagertopfboden 2' und dem Lenkgabelrücken 3' dient ein am Umfang des Schwenklagertopfbodens 2' angebrachter Abdeckring 17 aus elastischem bzw. flexiblem Werkstoff, der zugleich mit aufwärts gerichteten Abdecklippen 17' versehen ist, die in die im Schwenklagertopf 2 vorhandenen Aussparungen 15 und unter die hier hineinragenden Vosprünge 11'' der Sperrplatte 11 greifen. Weiterhin kann zur bloßen Abdeckung des Schwenklagertopfes 2 und der in ihm untergebrachten Kugellaufschale 8 sowie der Sperrplatte 11 noch eine dünnwandige Abdeckscheibe 18, Kappe o.ddgl. vorgesehen sein, die zweckmäßig aus Kunststoff besteht. Ihre Befestigung kann, wie dargestellt, mittig an der Abdeckkappe 12 oder auch dadurch erfolgen, daß die Scheibe 18 mit entsprechend nach unten gebogenen Klemmlappen versehen ist, die sich unmittelbar gegen die Schwenklagertopfwandung legen.

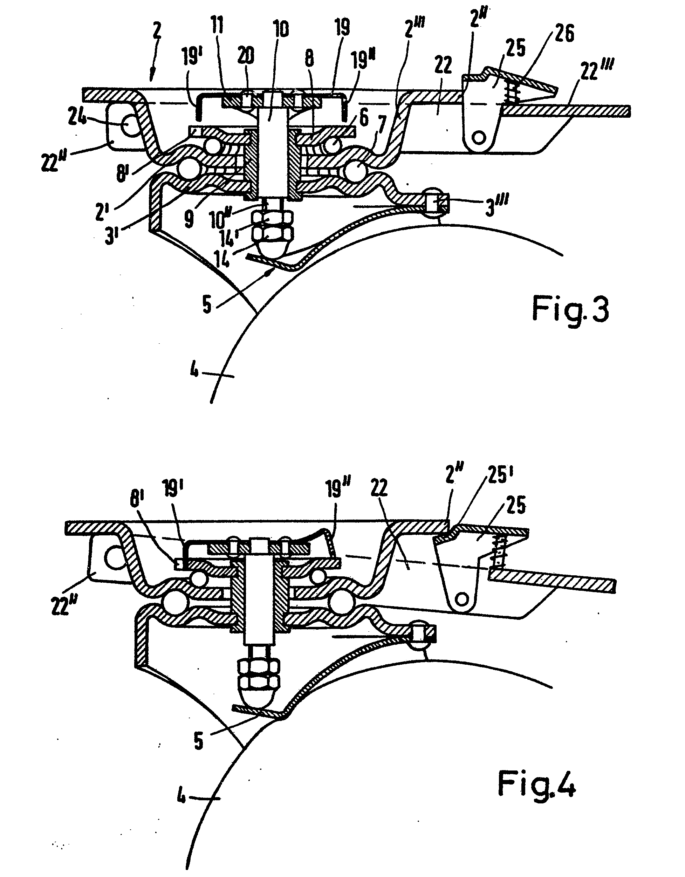

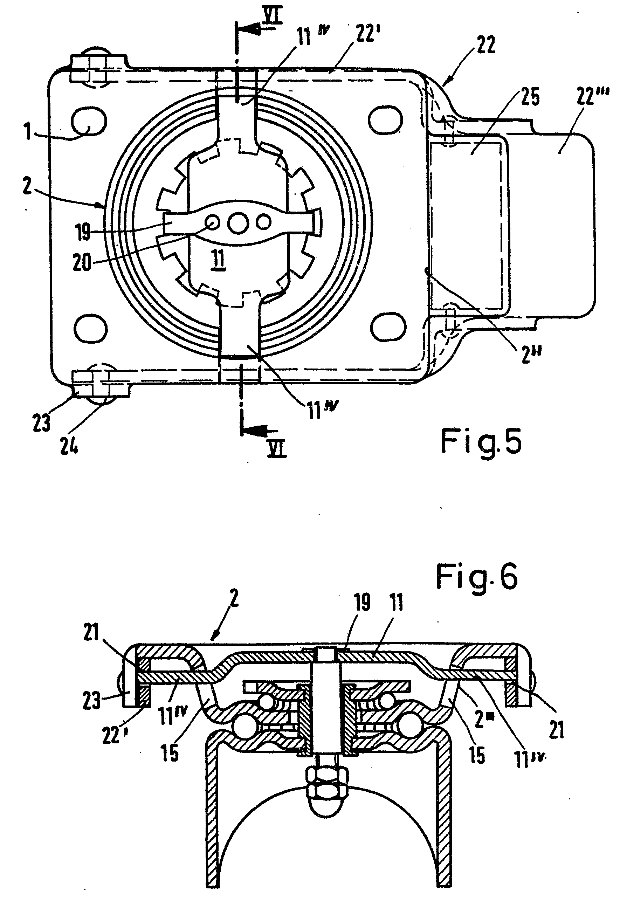

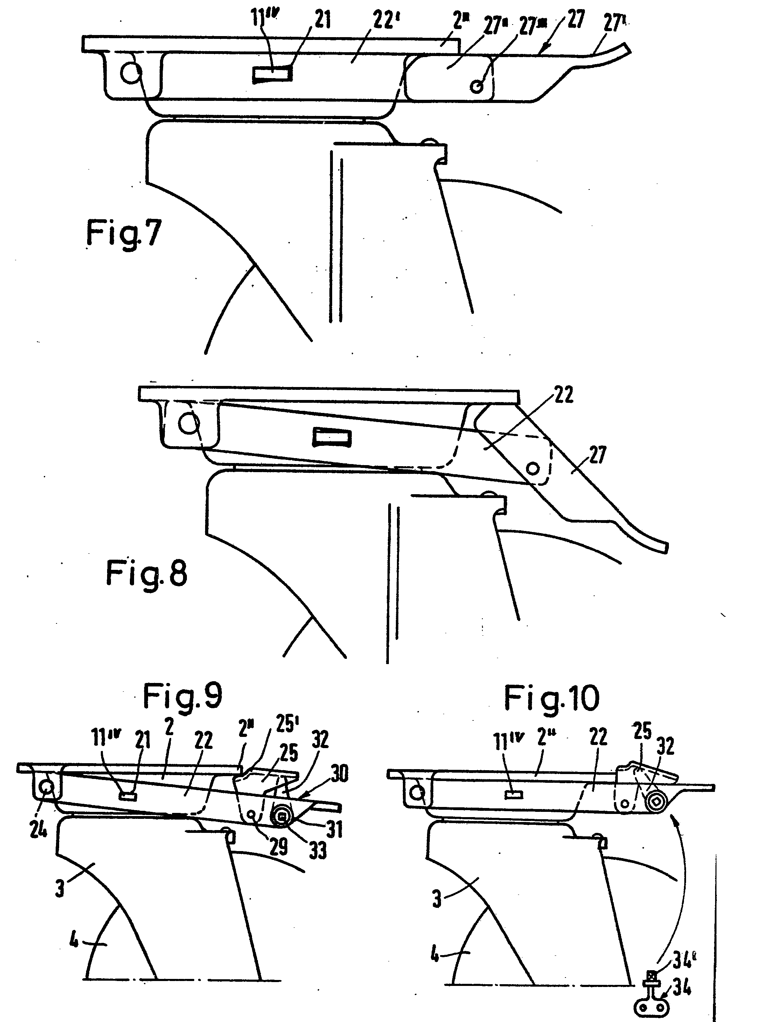

Bei den in den Fig. 3 bis 10 dargestellten Lenkrollen sind die mit den Fig. 1 und 2 übereinstimmenden Mermale mit den gleichen Bezugszeichen versehen. Hier ist auf der am oberen Ende des Stellbolzens 10 axial unverschieblich befestigten Sperrplatte 11 ein Federblech 19 befestigt, das mit zwei nach unten abgewinkelten, die vorspringenden Sperrlappen bildenden Sperrzungen 19',19'' versehen ist, die mit der am Umfang der Kugellaufschale 8 vorhandenen Sperrverzahnung 8' in formschlüssigen Eingriff zu bringen sind. Dabei sind die federnden Sperrzungen 19',19'' sowie die Sperrverzahnung 8' so zueinander versetzt angeordnet bzw. ausgebildet, daß jeweils eine Sperrzunge 19' in eine Sperrzahnlücke einzufahren vermag, während die andere Sperrzunge 19'' auf einem Sperrzahn aufsitzt. Die Sperrplatte 11 besitzt hier zwei diagonal gegenüberliegende Vorsprünge, die zu Betätigungslappen 11$^{IV}$ (vergl. Fig. 5 und 6) verlängert sind, die durch die in der Schwenklagertopfwandung 2''' vorhandenen Aussparungen 15 hindurchgreifen. Diese Aussparungen sind wiederum so geformt, daß dadurch die Sperrplatte 11 und das mit ihr über die Nieten 20 fest verbundene Federblech 19 verdrehungssicher aber axial verschieblich im Schwenklagertopf 2 geführt werden. Mit ihren äußeren Enden greifen die Betätigungslappen 11$^{IV}$ entsprechend den Fig. 7 und 8 in schwalbenschwanzförmige Aussparungen 21, die sich in den Gabelschenkein 22' eines außen am Schwenklagertopf 2 angebrachten und letzteren gabelartig umgreifenden Feststellhebels 22 befinden. Dieser ermöglicht eine Einzelfeststellung der Lenkrolle unabhängig von deren jeweiliger Laufrichtung. Der Feststellhebel 22 mit seinen Gabelschenkelenden 22'' in den auf der einen Seite des Schwenklagertopfes 2 vorhandenen Anlenkaugen 23 mittels der als Gelenkbolzen dienenden Niete 24 gelagert, während er mit seinem das Betätigungsende bildenden Gabelsteg 22'''' über den gegenüberliegenden Rand 2'' des Schwenklagertopfas hinausragt.

Bei dem Ausführungsbeispiel nach den Fig. 3 bis 6 ist am Feststellhebel 22 zwischen dessen zur Feststellbetätigung dienendem Gabelsteg 22''' und dem zugewandten Schwenklagertopfrand 2'' eine Rasttaste 25 angelenkt, die unter Spannung der Druckfeder 26 steht. In der gemäß Fig. 4 heruntergedrückten Betätigungsstellung des Feststellhebels 22 greift diese Raste 25 mit ihrer Rastkante 25' unter der Schwenklagertopfrand 2'', wodurch der Feststellhebel 22 in seiner Feststellage verrastet wird. Wird dagegen in dieser Feststellage die Rasttaste 25 z.B. durch Fußbetätigung heruntergedrückt, so gleitet ihre Rastkante 25' vom Schwenklagertopfrand 2'' ab, so daß dann der Feststellhebel 22 unter Wirkung der Blattfeder 5' wieder in seine in Fig. 3 dargestellte Ruhe- bzw. Lösestellung gelangt.

Bei dem in den Fig. 7 und 8 dargestellten Ausführungsbeispiel ist am Betätigungsende des Feststellhebels 22 ein dessen Gabelsteg übergreifender, zweiarmig ausgebildeter Fußbetätigungshebel 27 vorgesehen, der mit seinem dem Fußbetätigungsende 27' gegenüberliegenden Ende 27'' unter den Schwenklagertopfrand 2'' greift. Wie ohne weiteres ensichtlich, wird durch Niederdrücken des Fußbetätigungshebels 27 der Feststellhebel 22 in seine untere Feststellage gedrückt, wodurch über den vorbeschriebenen Feststellmechanismus die Drehfeststellung der Randes 4 und die Schwenkfeststellung der Lenkgabel 3 bewirkt werden. Zu deren Lösen wird in diesem Falle der Fußbetätigungshebel 27 nach oben verschwenkt, wodurch der Feststellhebel 22 in seine Ruhe- bzw. Lösestellung gemäß Fig. 7 gelangt. Es versteht sich, daß die vorerwähnten Verstellbewegungen des Fußbetätigungshebels 27 durch entsprechende Schwergängigkeit seines Lagergelenks 27'''' oder auch durch nicht dargestellte Rastelemente gebremst bzw. verrastet werden können.

Die in den Fig. 9 und 10 dargestellte Lenkrolle ist grundsätzlich von der in den Fig. 3 bis 6 gezeichneten Bauart. Um ein unbefugtes Verfahren bzw. Wegfahren des mit solchen Lenkrollen ausgerüsteten Gerätes, beispielsweise eines Müllbehälters oder auch eines Krankenbettes o.dgl., zu verhindern, ist der Feststellhebel 22 hier in seiner in Fig. 9 dargestellten Feststellage durch ein schlüsselbetätigbares Sperrschloß 30 abschließbar zu verriegeln. Dieses Sperrschloß 30 besteht aus einer auf dem Feststellhebel 22 unterhalb der rasttaste 25 drehverstellbarangeordneten Schließwelle 31 mit auf ihr sitzendem Schließdaumen 32 und der an ihrem einen Ende vorgesehenen Schlüsseleinstecköffnung 33. In der in Fig. 9 dargestellten Schließstellung des Sperrschlosses 30 greift dessen Schließdaumen 32 unter das freie Ende der Rasttaste 25, so daß diese nicht durch entsprechende Fuß- oder Handbetätigung nach unten gedrückt werden kann, mithin der Feststellhebel 22 aus dieser Position nicht in seine Lösestellung nach Fig. 10 gebracht werden kann. Vielmehr muß dazu zunächst der Steckschlüssel 34 mit seinem Vierkantende 34' in die entsprechend gestaltete Einstecköffnung 33 der Schließwelle 31 eingesteckt und diese so verdreht werden, daß ihr Schließdaumen 32 in die in Fig. 10 dargestellte Löseposition gelangt, in der die Rasttaste 25, wie dargestellt, heruntergedrückt werden und dadurch der Feststellhebel 22 in seine ober, flach unter dem Rand 2'' des Schwenklagertopfes 2 liegende Lösestellung gelangen kann. In dieser Stellung werden über die Betätigungslappen 11$^{IV}$ der nicht dargestellen Sperrplatte 11 und den Stellbolzen 10 sowohl die Schwenkbeweglichkeit der Lenkgabel 3 als auch die Drehbeweglichkeit des Laufrades 4 freigegeben. Das absperrbare Schloß 30 kann auch als am Feststellhebel 22 angebrachtes Zylinderschloß ausgebildet sein, dessen mit einem Schlüssel-Einführschlitz, einem Schließdaumen und mit Zuhaltungsstiftbohrungen versehener Zylinderkern an die Stelle der Schließwelle 31 treten kann.

**Patentansprüche**

1. Feststellbare Lenkrolle für verfahrbare Geräte, insbesondere Müll- o.dgl. -behälter, mit einem aus einem nach unten durchgewölbten Boden (2') und einem hochgezogenen, am Gerät breitflächig zu befestigenden Rand (2'') bestehenden, starkwandigen Schwenklagertopf (2) und einer das drehbare Rollenrad (4) sowie einen zu dessen Drehfeststellung dienenden Bremskörper (5) tragenden Lenkgabel (3), deren Rücken (3') über eine eine zentrale Öffnung im Schwenklagertopfboden (2') frei durchsetzende Verbindungsbüchse (9) mit einer oberhalb des Schwenklagertopfbodens (2') liegenden, auf ihrer Oberseite kugelkranzfreien Kugelaufschale (8) drehfest verbunden ist, wobei zwischen letzterer und dem Schwenklagertopfboden (2') einerseits sowie zwischen letzterem und dem Lenkgabelrücken (3') andererseits je ein Kugelkranz (6,7) angeordnet ist und in der Verbindungsbüchse (9) ein gegen Federdruck axial verschiebbarer Stellbolzen (10) zum Betätigen des Bremskörpers (5) und weiterhin eine mit einer verdrehungssicher geführten, durch den Stellbolzen (10) axial verschieblichen Sperrplatte (11) versehene Einrichtung für die Schwenkfeststellung der Lenkgabel (3) vorgesehen ist, dadurch gekennzeichnet, daß die Sperrplatte (11) im Schwenklagertop (2) oberhalb der Kugelaufschale (8) angeordnet, mit an ihrem Umfang vorhandenen Vorsprüngen (11'') in in der Schwenklagertopfwandung (2''') vorhandenen Aussparungen (15) verdrehungssicher eingreift und mit der Kugelaufschale (8) in blockierenden Schwenkfeststelleingriff zu bringen ist.

2. Lenkrolle nach Anspruch 1, dadurch gekennzeichnet, daß die Sperrplatte (11) auf dem Stellbolzen (10) axial unverschieblich befestigt und mit nach unten zur Kugellaufschale (8) vorspringenden Sperrlappen (11''') versehen ist, die mit einer am Umfang der Kugellaufschale (8) vorhandenen Sperrverzahnung (8') in Eingriff zu bringen sind.

3. Lenkrolle nach den Ansprüchen 1 und 2, dadurch gekennzeichnet, daß der Stellbolzen (10) an seinem oberen Ende einen Aufsteckzapfen (10') für die darauf aufgesetzte Sperrplatte (11) besitzt und an seinem unteren Ende einen Gewindezapfen (10'') aufweist, auf dem eine am Bremskörper (5) anliegende Hutmutter (14) und eine Kontermutter (14') aufgeschraubt sind, wobei der Bremskörper (5) als löffelartiger Bremsschuh ausgebildet ist, der an einer am Lenkgabelrücken (3') befestigten Blattfeder (5') angebracht ist und den Stellbolzen (10) in seine obere Freigabestellung zu drücken sucht.

4. Lenkrolle nach den Ansprüchen 1 bis 3, dadurch gekennzeichnet, daß am Außenumfang des Schwenklagertopfbodens (2') ein dessen den unteren Kugelkranz (7) umgebenden Ringspalt (16) zum Lenkgabelrücken (3') verschließender, aus elastischem Werkstoff bestehender Abdeckring (17) vorgesehen ist, der mit aufwärts gerichteten Abdecklippen (17') versehen ist, die in die im Schwenklagertopf (2) vorhandenen Aussparungen (15) und unter die hier hineinragenden Vorsprünge (11'') der Sperrplatte (11) greifen.

5. Lenkrolle nach den Ansprüchen 1 bis 4, dadurch gekennzeichnet, daß das Innere des Schwenklagertopfes (2) und die darin untergebrachte Kugelaufschale (8) sowie die Sperrplatte (11) durch eine dünnwandige Abdeckscheibe, -kappe o.dgl. (18) aus Kunststoff abgedeckt sind.

6. Lenkrolle nach einem der Ansprücher 1 bis 5, dadurch gekennzeichnet, daß mindestens einer der am Umfang der Sperrplatte (11) vorhandenen vorsprünge zu einem durch die in der Schwenklagertopfwandung (2''') vorhandene Aussparung (15) hindurchgreifenden Betätigungslappen (11$^{IV}$) verlängert ist, an dem ein außen am Schwenklagertopf (2) gelenkig angebrachter Feststellhebel (22) angreift.

7. Lenkrolle nach Anspruch 6, dadurch gekennzeichnet, daß der Feststellhebel (22) als die Schwenklagertopfwandung (2''') umgreifender Gabelhebel ausgebildet ist, der mit seinen Gabelschenkelenden (22'') in auf der einen Seite des Schwenklagertopfes (2) vorhandenen Anlenkaugen (23) gelagert ist, mit seinem das Betätigungsende bildenden Gabelstag (22'''') über den gegenüberliegenden Rand (2'') des Schwenklagertopfes (2) hinausragt und in seinen beiden Gabelschenkeln (22') Aussparungen (21) aufweist, in die je ein an der Sperrplatte (11) vorhandener Betätigungslappen (11$^{IV}$) hineinragt.

8. Lenkrolle nach den Ansprüchen 6 und 7, dadurch gekennzeichnet, daß am Feststellhebel (22) zwischen dessen zur Feststellbetätigung dienendem Gabelsteg (22''') und dem zugewandten Schwenklagertopfrand (2'') eine unter Federspannung stehende Rasttaste (25) angelenkt ist, die in der heruntergedrückten Betätigungsstellung des Feststellhebels (22) mit einer Rastkante (25') unter den Schwenklagertopfrand (2'') greift und dadurch den Feststellhebel (22) in seiner Feststellage verrastet, dagegen bei eigenem Herunterdrücken den Feststellhebel freigibt.

9. Lenkrolle nach den Ansprüchen 6 und 7, dadurch gekennzeichnet, daß am Betätigungsende des Feststellhebels (22) ein dessen Gabelsteg übergreifender, zweiarmig ausgebildeter Fußbetätigungshebel (27) vorgesehen ist, der mit seinem dem Fußbetätigungsende (27') gegenüberliegenden Ende (27'') unter den Schwenklagertopfrand (2'') greift.

10. Lenkrolle nach Anspruch 2, dadurch gekennzeichnet, daß auf der Sperrplatte (11) ein Federblech (19) befestigt ist, das mit nach unten abgewinkelten, die vorspringenden Sperrlappen bildenden Sperrzungen (19',19'') versehen ist.

11. Lenkrolle nach Anspruch 10, dadurch gekennzeichnet, daß zwei federnde Sperrzungen (19',19'') vorhanden und diese sowie die am Umfang der Kugellaufschale (8) vorhandene Sperrverzahnung (8') so zueinander versetzt angeordnet bzw. ausgebildet sind, daß jeweils eine Sperrzunge (19') in eine Sperrzahnlücke einzufahren vermag, wahrend die andere Sperrzunge (19'') auf einem Sperrzahn aufsitzt.

12. Lenkrolle nach einem der Ansprüche 6 bis 8, dadurch gekennzeichnet, daß der Feststellhebel (22) in seiner die Schwenkbeweglichkeit der Lenkgabel (3) und/oder die Drehbewegung des Rollenrades (4) blockierenden Feststellage durch ein schlüsselbetätigbares Sperrschloß (30) abschließbar zu verriegeln ist.

13. Lenkrolle nach Anspruch 12, dadurch gekennzeichnet, daß das Sperrschloß (30) aus einer auf dem Feststellhebel (22) drehverstellbar angeordneten Schließwelle (31) mit an ihrem einen Ende vorgesehener Schlüssel-Einstecköffnung (33) und einem an ihr verdeckt angebrachten, mit einem entsprechenden Widerlager zusammenwirkenden Schließdaumen (32) besteht.

14. Lenkrolle nach den Ansprüchen 12 und 13, dadurch gekennzeichnet, daß die Schließwelle als mit einem Schlüssel-Einführschlitz, einem Schließdaumen und mit Zuhaltungsstiftbohrungen versehener Zylinderkern eines am Feststellhebel (22) angebrachten Zylinderschlosses ausgebildet ist.

15. Lenkrolle nach einem der Ansprüche 12 bis 14, dadurch gekennzeichnet, daß die Schließwelle (31) mit ihrem Schließdaumen (32) unterhalb der Rasttaste (25) so angebracht ist, daß diese in ihrer Raststellung durch den in Sperrstellung befindlichen Schließdaumen (32) zu blockieren ist.

## Revendications

1. Roulette pivotante blocable pour appareils roulants, notamment pour des conteneurs d'ordures ménagères ou autres récipients analogues, munie d'une part d'une cuvette (2) à paroi épaisse formant palier de pivotement et composée d'un fond (2') convexe vers le bas et d'un large rebord (2'') de fixation à l'appareil, d'autre part d'une fourche (3) de direction portant la roulette tournante (4) ainsi qu'un corps de freinage (5) servant à en bloquer la rotation, le dos (3') de cette fourche étant relié, par l'intermédiaire d'une douille de liaison (9) traversant librement une ouverture ménagée au centre du fond (2') de la dite cuvette, à une coquille de roulement à billes (8) située au-dessus du dit fond et dont la face supérieure est dépourvue de billes, une couronne de billes (6) étant disposée entre cette coquille et le fond (2') de la dite cuvette, une autre couronne be billes (7) étant disposée entre ce fond et le dos (3') de la fourche, tandis que dans la douille de liaison (9) est prévu un axe de manoeuvre (10) qui peut coulisser axialement contre la pression d'un ressort qui actionne le corps de freinage, le blocage du pivotement de la fourche (3) étant assuré par un système muni d'une plaquette de verrouillage (11) qui ne peut tourner mais peut coulisser axialement avec le dit axe de manoeuvre (10), cette roulette pivotante étant remarquable en ce que la plaquette de verrouillage (11) est disposée dans la cuvette (2) qui forme le palier de pivotement, au-dessus de la coquille de roulement (8), cette plaquette étant munie sur son pourtour de parties en saillie (11'') par lesquelles elle peut être engagée dans des évidements (15) ménagés dans la paroi (2''') de la dite cuvette, de sorte qu'elle ne peut plus tourner et peut être mise en prise de blocage du pivotement avec la coquille de roulement (8).

2. Roulette pivotante selon la revendication 1, remarquable en ce que la plaquette de verrouillage (11) est fixée sur l'axe de manoeuvre (10) sans possibilité de déplacement axial par rapport à cet axe et est munie de goussets de verrouillage (11''') qui font saillie vers le bas sous la coquille de roulement (8) et peuvent être mis en prise avec une denture de verrouillage (8') prévue sur le pourtour de la coquille.

3. Roulette pivotante selon la revendication 2, remarquable en ce que l'axe de manoeuve (10) comporte, à son extrémité supérieure, un ergot de fixation (10') pour la plaquette de verrouillage placée sur cet axe, et, á son extrémité inférieure, une tige filetée (10'') sur laquelle sont vissés un écrou à chapeau (14) en contact avec le corps de freinage (5) et un contre-écrou (14'), le corps de freinage étant constitué par un patin de frein en forme de cuillère qui est fixé à un ressort à lame (5') lui-même fixé au dos (3') de la fourche et qui tend à repousser l'axe de manoeuvre (10) dans sa position haute de déblocage.

4. Roulette pivotante selon la revendication 3, remarquable en ce que sur le pourtour du fond (2') de la cuvette (2) est prévue une bague de parement (17) en matière élastique qui ferme la fente annulaire (16) qui entoure la couronne de billes inférieure (7), cette bague (17) ayant une lèvre (17') dirigée vers le haut qui est engagée dans les évidements (15) ménagés dans la cuvette (2) et sous les parties en saille (11'') de la plaquette de verrouillage (11) engagées dans ces évidements.

5. Roulette pivotante selon la revendication 4, remarquable en ce que l'intérieur de la cuvette (2), la coquille de roulement (8) logée dans celle-ci et la plaquette de verrouillage (11) sont recouverts par un mince disque de parement ou autre élément analogue (18) en matière synthétique.

6. Roulette pivotante selon l'une quelconque des revendications précédentes, remarquable en ce qu' au moins l'une des parties en saillie sur le pourtour de la plaquette de verrouillage (11) est prolongée pour former une patte de manoeuvre (11$^{lv}$) qui traverse un évidement (15) ménagé dans la paroi (2''') de la cuvette (2) et qui est attaquée par un levier de blocage (22) articulé à l'extérieur sur la cuvette (2).

7. Roulette pivotante selon la revendication 6, remarquable en ce que le levier de blocage (22) est conçu sous forme d'un levier en U qui
a) chevauche la paroi (2''') de la cuvette(2),
b) est monté par les extrémités de ses ailes (22') dans des oeillets d'articulation (23) prévus d'un côté de la cuvette (2),
c) s'étend, par son âme (22''') qui constitue l'extrémite de manoeuvre, au-delà du bord de la cuvette (2) situé en regard, et
d) comporte dans ses deux ailes (22') des évidements (21) dans chacun desquels est engagée une patte de manoeuvre (11$^{lv}$) solidaire de la plaquette (11).

8. Roulette pivotante selon la revendication 7, remarquable en ce que sur le levier de blocage (22), entre l'âme de celui-ci servant à actionner le blockage et le rebord (2'') de la cuvette (2), est articulée et soumise à l'action d'un ressort une touche d'enclenchement (25) qui, lorsque le levier de blocage (22) est repoussé vers le bas, présente une arête (25') qui est engagée sous le rebord (2'') de la cuvette (2), de sorte que le levier de blocage (22) est retenu dans sa position de blocage tandis que cette touche libère ce levier lorsque l'on appuie sur elle.

9. Roulette pivotante selon la revendication 7, remarquable en ce qu'à l'extrémité de manoeuvre du levier de blocage (22) est prévu un levier à deux bras formant pédale de manoeuvre dont l'extrémité (27'') opposée à celle (27') destinée à être actionnée au pied est engagée sous le rebord (2'') de la cuvette (2).

10. Roulette pivotante selon la revendication 2 remarquable en ce que sur la plaquette de verrouillage (11) est fixée une tôle à ressort (19) munie de languettes de verrouillage (19', 19'') coudées vers le bas pour former les parties en saillie de verrouillage.

11. Roulette pivotante selon la revendication 10, remarquable en ce que deux languettes de verrouillage (19', 19'') à effet de ressort sont prévues et sont, par rapport à la denture (8') du pourtour de la coquille (8), decaléés ou formées de telle façon que seule une languette (19') à la fois peut pénétrer dans un creux entre dents tandis que l'autre languette (19'') repose sur une dent de la dite denture (8').

12. Roulette pivotante selon l'une quelconque des revendications 6 à 8, remarquable en ce que le levier de blockage (22) peut, au moyen d'une serrure à clé (30), être verrouillé dans la position qu'il occupe pour bloquer le pivotement de la fourche (3) et/ou la rotation de la roulette (4).

13. Roulette pivotante selon la revendication 12, remarquable en ce que la serrure (30) se compose d'un arbre de verrouillage (31) disposé à rotation sur le levier de blocage (22), cet arbre comportant, à une extrémité, une entrée de clé (33) et, fixé sur lui dans une position masquée, un mentonnet de verrouillage (32) coopérant avec un contre-appui correspondant.

14. Roulette pivotante selon la revendication 13, remarquable en ce que l'arbre de verrouillage est conçu sous forme du barillet cylindrique d'une serrure à pompe fixée au levier de blocage (22), ce barillet étant muni d'une entrée de clé, d'un mentonnet de verrouillage et d'alésages de goupilles d'arrêt.

15. Roulette pivotante selon l'une quelconque des revendications précédentes, remarquable en ce que l'arbre de verrouillage (32) est, avec son mentonnet (32), disposé au-dessous de la touche (25) de telle façon que celleci puisse être bloquée dans sa position d'enclenchement par le mentonnet (32) situé en position de verrouillage.

**Claims**

1. Lockable pivot wheel for movable apparatus, in particular refuse or the like containers, having a strong walled pivot bearing head (2) comprising a downwardly drawn floor (2') and an upwardly drawn wide-faced rim for fixing to the apparatus and a pivot fork (3) carrying the rotatable roller wheel (4) as well as a brake body (5) serving for the rotary locking thereof, whose back (3') is rotatably fixed to a ball race disc (8) lying above the pivot bearing head floor (2) and having its upper side free of ball races by way of a connecting bush (9) passing freely through a central opening in the pivot bearing head floor (2'), whereby a series of balls (6,7) is arranged respectively between the ball race disc (8) and the pivot bearing head floor (2'), on the one hand, as well as between the latter and the pivot fork back (3') on the other hand, and a control pin (10) for the operation of the brake body (5) is axially slidably arranged in the connecting bush (9) against spring pressure and, furthermore, a device for the pivot locking of the pivot fork (3) is provided which comprises a non-rotatably guided locking plate (11) axially slidable by means of the control pin (10), characterised in that the locking plate (11) arranged in the pivot bearing head (2) above the ball race disc (8) engages non-rotatably in openings (15) present in the pivot bearing head wall (2''') by means of projections (11'') on its periphery and is to be brought into blocking pivot locking engagement with the ball race disc (8).

2. Pivot wheel according to claim 1 characterised in that the locking plate (11) is axially non-slidably fixed to the control pin (10) and is provided with locking tongues (11''') projecting downwardly to the ball race disc (8) which are to be brought into engagement with a locking toothing (8') present on the periphery of the ball race disc (8).

3. Pivot wheel according to claims 1 and 2 characterised in that the control pin (10) includes an extension pin (10') at its upper end for the locking plate (11) sat thereon and has a threaded pin (10'') at its lower end on which a cap nut (14) lying against the brake body (5) and a lock nut (14') are screwed, whereby the brake body is formed as a spoon-like brake shoe (5) which is mounted on a leaf spring (5') fixed to the pivot fork back (3') and seeks to push the control pin (10) into its upper non-operative position.

4. Pivot wheel according to claims 1 to 3 characterised in that on the outer periphery of the pivot bearing head floor (2') there is provided a plastics material cover ring (17) sealing an annular clearance (16) between it and the pivot fork back (3') and surrounding the lower ball elements (7), which cover ring is provided with outwardly directed cover lips (17') which engage in the openings (15) present in the pivot bearing head (2) and under the projections (11'') of the locking plate (11) extending thereinto.

5. Pivot wheel according to claims 1 to 4 characterised in that the interior of the pivot bearing head (2) and the ball race disc (8) located therein as well as the locking plate (11) are covered by a thin walled cover disc or cap or the like (18) of plastics material.

6. Pivot wheel according to one of claims 1 to 5 characterised in that at least one of the projections present on the periphery of the locking plate (11) is extended into an operating lug (11^{IV}) extending through the opening (15) present in the pivot bearing head wall (2'''), on which lug a locking lever (22) pivotally mounted on the outside of the pivot bearing head (2) engages.

7. Pivot wheel according to claim 6 characterised in that the locking lever (22) is constructed as a forked lever extending around the pivot bearing head wall (2''') and it is supported by its fork leg ends (22'') in pivot eyes (23) present on one side of the pivot bearing head (2), it extends by way of its fork base (22'''') forming the operational end over the opposed edge (2'') of the pivot bearing head (2), and has apertures (21) in both its fork legs (22') in which a respective one of the operating lugs (11^{IV}) present on the locking plate (11) extends.

8. Pivot wheel according to claims 6 and 7 characterised in that on the locking lever (22) between its fork part (22''') serving as the locking operator and the adjacent pivot bearing head rim (2'') a catch element (25) is pivoted under spring loading which, in the downwardly pressed operational position of the locking lever (22), grips by way of its catch edge (25') under the pivot bearing head rim (2'') and thereby holds the locking lever (22) in its locking position, but releases the locking lever by being pressed downwardly.

9. Pivot wheel according to claims 6 and 7 characterised in that, at the operating end of the locking lever (22), a two-arm type foot operating lever (27) extending around the fork stem of the lever is provided which engages by way of its end (27'') lying opposite the foot operating end (27') under the pivot bearing head rim (2'').

10. Pivot wheel according to claim 2 characterised in that a spring plate (19) is fixed on the locking plate (11) and is provided with downwardly bent locking tongues (19',19'') forming the projecting locking tongues.

11. Pivot wheel according to claim 10 characterised in that two resilient tongues (19',19'') are present and these as well as the locking toothing (8') present on the periphery of the ball race disc (8) are so constructed or arranged with respect to each other that respectively one locking tongue (19') can pass into a locking toothing space while the other locking tongue (19'') sits on a locking tooth.

12. Pivot wheel according to one of claims 6 to 8 characterised in that the locking lever (22) is to be lockably held by a key operable locking bolt (30) in its locking position preventing the pivoting movement of the pivot fork (3) and/or the rotational movement of the roller wheel (4).

13. Pivot wheel according to claim 12 characterised in that the locking bolt (30) includes a locking shaft (31) rotatably adjustable on the locking lever (22) and having a key insert opening (33) provided at its one end and a locking cam (32) located thereon in a screened manner and cooperating with a corresponding abutment.

14. Pivot wheel according to claim 12 and 13 characterised in that the locking shaft is formed as the cylinder barrel of a cylinder lock, located on the locking lever (22) and provided with a key entry slot, a locking cam and with tumbler pin apertures.

15. Pivot wheel according to one of claims

15 0 001 283 16

12 to 14 characterised in that the locking shaft (31) with its locking cam (32) is so arranged underneath the locking catch (25) that this is blocked in its locking position through the locking cam (32) being located in the locking position.

Fig.1

Fig.2

Fig.3

Fig.4

2

0 001 283

Fig.5

Fig.6

3

Fig.7

Fig.8

Fig.9

Fig.10